(19) Europäisches Patentamt
European Patent Office
Office européen des brevets

(11) Veröffentlichungsnummer: **0 205 855**
**B1**

(12) # EUROPÄISCHE PATENTSCHRIFT

(45) Veröffentlichungstag der Patentschrift: **12.07.89**

(51) Int. Cl.⁴: **C08G 63/60**, D01F 6/84, C08J 5/18

(21) Anmeldenummer: **86106293.3**

(22) Anmeldetag: **07.05.86**

(54) **Thermotrope aromatische Polyester mit hervorragenden mechanischen Eigenschaften und guter Verarbeitbarkeit, Verfahren zu ihrer Herstellung und ihre Verwendung zur Herstellung von Formkörpern, Filamenten, Fasern und Folien.**

(30) Priorität: **18.05.85 DE 3517948**

(43) Veröffentlichungstag der Anmeldung: **30.12.86 Patentblatt 86/52**

(45) Bekanntmachung des Hinweises auf die Patenterteilung: **12.07.89 Patentblatt 89/28**

(84) Benannte Vertragsstaaten: **DE FR GB IT NL**

(56) Entgegenhaltungen: **EP-A- 0 026 608**
**WO-A-79/01034**

(73) Patentinhaber: **BAYER AG, D-5090 Leverkusen 1 Bayerwerk(DE)**

(72) Erfinder: **Eckhardt, Volker, Dr., Bodelschwinghstrasse 14, D-4150 Krefeld(DE)**
Erfinder: **Dicke, Hans-Rudolf, Dr., Bodelschwinghstrasse 16, D-4150 Krefeld(DE)**
Erfinder: **Paetz, Klaus-Christian, Dr., Rosenkranz 23, D-5093 Burscheid(DE)**
Erfinder: **El Sayed, Aziz, Dr., Saarlauterner Strasse 39, D-5090 Leverkusen(DE)**

EP 0 205 855 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft hochmolekulare thermotrope vollaromatische Polyester mit hoher Festigkeit, Steifigkeit und Zähigkeit und niedriger Schmelztemperatur und Schmelzviskosität, ein Verfahren zu ihrer Herstellung und ihre Verwendung zur Herstellung von Formkörpern, Filamenten, Fasern und Folien.

Als "thermotrop" bezeichnet man solche Substanzen, die flüssig-kristalline Schmelzen bilden. Thermotrope Polykondensate sind hinreichend bekannt, vgl. z.B.

F.E. McFarlane et al., Liquid Crystal Polymers II, Contemporary Topics in Polymer Science, Vol. 2, Plenum Publishing Corporation, 1977;
W.J. Jackson und H.F. Kuhfuss, J. Polymer Science, Polymer Chem. Ed. 14, 2042 (1976);
W.C. Wooten et al. in A. Ciferri "Ultra-high Modulus Polymers", Applied Science Publ., London 1979, S 362 ff.;
A. Blumstein et al., "Liquid Crystalline Order in Polymers", Academic Press 1978;
J. Preston, Angew. Makromol. Chem. 109/110, S. 1-19 (1982);
A. Ciferri, W.R. Krigbhaum, R.B. Meyer "Polymer Liquid Crystals", Academic Press New York, 1982;
EP-A 1185, 1340, 8855, 11 640, 15 856, 17 310, 18 145, 18 709, 22 344, 44 205, 49 615, 26 991;
US-PS 3 991 013, 3 991 014, 4 066 620, 4 067 852, 4 083 829, 4 107 143, 4 226 970, 4 232 143, 4 232 144, 4 245 082, 4 335 232, 4 381 389, 4 399 270, 4 398 015, 4 447 592;
WO 79/797, 79/1030, 79/1040.

Der flüssig-kristalline Zustand von Polyesterschmelzen läßt sich mit Hilfe eines Polarisationsmikroskops untersuchen; Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicholschen Prismen ergab sich dann ein Wert von 0,01 Skalenteilen.

Die Schichtdicke der untersuchten Polyesterschmelzen betrug 100 µm.

Die Untersuchung der Polyester erfolgte nach dem Aufschmelzen der Proben bei Temperaturen zwischen 280 und 400°C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssigkristallin eingestuft.

Die flüssig-kristallinen Polyester zeigen in der Meßanordnung Werte über 1 Skalenteil, meist Werte von 3-90 Skalenteilen. Für amorphe Schmelzen, z. B. aromatische Polycarbonate, wurden dagegen Werte von weniger als 0,1 Skalenteilen gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto 1974 beschrieben ist.

Die DE-OS 2 025 971 betrifft hochmolekulare vollaromatische Polyester auf Basis von p-Hydroxybenzoesäure, aromatischen Dicarbonsäuren (wie Terephthal- oder Isophthalsäure) und Diphenolen (wie Hydrochinon oder 4,4′-Dihydroxybiphenyl). Aufgrund der verwendeten Komponenten sind diese Polyester thermotrop; sie können z.B. zu Fasern verarbeitet werden. Von den 13 Polyestern der Beispiele schmilzt ein einziger unter 300°C. Diese Polyester sind also schlecht verarbeitbar.

Formkörper, die aus flüssig-kristalliner Schmelze hergestellt werden, weisen mechanische Festigkeiten auf, wie sie normalerweise bei unverstärkten, aus isotroper Schmelze verarbeiteten Polykondensaten nicht gefunden werden; jedoch läßt die Zähigkeit solcher Formkörper manche Wünsche offen (vgl. US 4 242 496, EP 44 175, W.J. Jackson jr.; Br. Polym. J. 12, 154 [1980]).

Durch eigene Untersuchungen wurde bestätigt, daß thermotrope Polyester hoher Festigkeit in der Regel geringe Zähigkeit und thermotrope Polyester hoher Zähigkeit in der Regel weniger ausgeprägte Festigkeit besitzen.

Aus der EP-A 26 608 sind thermotrope Polyester auf Basis von Hydroxycarbonsäuren, aromatischen Dicarbonsäuren und Diphenolen bekannt, wobei als Diphenol 3-Phenyl-4,4′-diacetoxybenzophenon zu über 50 Mol-% eingesetzt werden kann (siehe Beispiel IV, S. 12, Zeile 9 und 10 der europäischen Patentanmeldung). Die dort beschriebenen thermotropen Polyester besitzen einen nicht vollbefriedigenden Biege-E-Modul und eine verbesserungsbedürftige Erweichungstemperatur (siehe Vergleichsbeispiele).

Aufgabe der Erfindung war es daher, thermotrope vollaromatische Polyester bereit zu stellen, die gut zu verarbeiten sind und dennoch hervorragende mechanische Eigenschaften aufweisen.

Weitere Aufgabe der Erfindung war es, thermotrope vollaromatische Polyester zur Verfügung zu stellen, die durch thermoplastische Verformung zu Formteilen verarbeitet werden können, welche sowohl hohe mechanische Festigkeit als auch hohe Zähigkeit besitzen.

Bevorzugte neue thermotrope vollaromatische Polyester sollten bei einer Temperatur unterhalb 350°C, vorzugsweise unterhalb 330°C und besonders bevorzugt unterhalb von 300°C thermoplastisch verarbeitbar sein.

Bevorzugte neue vollaromatische Polyester sollten eine Schlagzähigkeit von mindestens 20, vorzugsweise von mindestens 30, insbesondere von mindestens 50 kJ/m² besitzen. Außerdem sollten diese bevorzugten Polyester eine Kerbschlagzähigkeit von mindestens 10, vorzugsweise von mindestens 20, insbesondere von mindestens 30 kJ/m² haben. Weiterhin sollten diese bevorzugten Polyester eine Biegefestigkeit von mindestens 150, vorzugsweise von mindestens 180, insbesondere von mindestens 200 MPa besitzen.

Überraschenderweise wurde gefunden, daß man die gewünschte Kombination vorteilhafter Eigenschaften dann erhält, wenn die vollaromatischen Polyester einkondensierte 3-Phenyl-3',4-dihydroxybenzophenon-reste enthalten.

Gegenstand der Erfindung sind thermotrope aromatische Polyester mit einer inhärenten Viskosität von mindestens 0,8 und mit wiederkehrenden Einheiten der Formeln

$$-\overset{O}{\overset{\|}{C}}-Ar^1-O- \qquad (I)$$

$$-\overset{O}{\overset{\|}{C}}-Ar^2-\overset{O}{\overset{\|}{C}}- \qquad (II)$$

$$-O-Ar^3-O- \qquad (III)$$

worin

$Ar^1$, $Ar^2$ bivalente aromatische Reste, deren kettenverlängernde Bindungen zu mindestens 90 Mol-% coaxial oder parallel entgegengesetzt und zu höchstens 10 Mol-% gewinkelt sind, mit 6 bis 18 C-Atomen bedeuten, wobei diese Reste durch 1 bis 4 $C_1$–$C_4$-Alkoxygruppen (vorzugsweise Methoxy) und/oder durch 1 bis 4 Halogenatome (vorzugsweise Fluor, Chlor, Brom) substituiert sein können,

das Molverhältnis I/II 30 : 70 bis 85 : 15, vorzugsweise 45 : 55 bis 80 : 20, insbesondere 60 : 40 bis 78 : 22, und das Molverhältnis II/III 0,95 bis 1,05, vorzugsweise 0,98 bis 1,02, insbesondere 1,0 betragen, dadurch gekennzeichnet, daß

$-O-Ar^3-O-$ zu mindestens 50 Mol-%, vorzugsweise zu mindestens 70 Mol-%, insbesondere zu mindestens 90 Mol-%, aus Resten der Formel

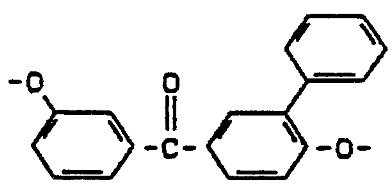

(IV)

und zu höchstens 50 Mol-%, vorzugsweise zu höchstens 30 Mol-%, insbesondere zu höchstens 10 Mol-%, aus anderen bivalenten aromatischen Resten, deren kettenverlängernde Bindungen gewinkelt, vorzugsweise aber coaxial oder parallel entgegengesetzt sind, mit 6 bis 18 C-Atomen besteht, wobei diese Reste durch 1 bis 4 $C_1$–$C_4$-Alkoxygruppen (vorzugsweise Methoxy) und/oder durch 1 bis 4 Halogenatome (vorzugsweise Fluor, Chlor, Brom) substituiert sein können.

Bei der Verwendung von Hydroxycarbonsäuren und Dicarbonsäuren, die zu Resten $Ar^1$ udn $Ar^2$ führen, deren kettenverlängernde Bindungen gewinkelt sind, wird man eine Menge nicht überschreiten, die die thermotropen Eigenschaften der resultierende Polyester verlorengehen lassen.

Bevorzugte Verbindungen, die zu einkondensierten Resten mit gewinkelten Bindungen führen, sind beispielsweise m-Hydroxybenzoesäure und Isophthalsäure.

Bei der Verwendung von Diphenolen, deren Einbau nicht zu Einheit IV führt, wird man darauf achten, daß die Temperatur, bei der die resultierenden Polyester thermoplastisch verarbeitbar sind, nicht über 350°C, vorzugsweise nicht über 330°C, insbesondere nicht über 300°C steigt.

Bevorzugte Hydroxycarbonsäuren, die zu Einheiten I führen, sind beispielsweise 6-Hydroxy-2-naphthoesäure, 4-Hydroxy-1-naphthoesäure, 5-Hydroxy-1-naphthoesäure, 4'-Hydroxy-4-biphenylcarbon-

säure, 4-Hydroxy-trans-zimtsäure, 3-Chlor-4-hydroxybenzoesäure, 3-Methyl-4-hydroxybenzoesäure, 3-Phenyl-4-hydroxybenzoesäure, 3-Methoxy-4-hydroxybenzoesäure und 3-Methoxy-4-hydroxyzimtsäure. Besonders bevorzugt ist 4-Hydroxybenzoesäure.

Bevorzugte aromatische Dicarbonsäuren, die zu Einheiten II führen, sind beispielsweise 2,6-Naphthalindicarbonsäure, 1,4-Naphthalindicarbonsäure, 1,5-Naphthalindicarbonsäure, 4,4'-Biphenyldicarbonsäure, 4,4'-Terphenyldicarbonsäure, 4,4'-trans-Stilbendicarbonsäure, 4,4'-Tolandicarbonsäure, 4,4-Azobenzoldicarbonsäure, Methylterephthalsäure, Methoxyterephthalsäure, Chlorterephthalsäure sowie Phenylterephthalsäure. Insbesondere wird Terephthalsäure bevorzugt.

Bevorzugte Diphenole, die zu Einheiten III führen, die nicht mit Struktur IV identisch sind, sind beispielsweise Resorcin, 4,4'-Dihydroxydiphenyl, -diphenylether, -diphenylsulfid, 4,4'-Dihydroxybenzophenon, insbesondere Hydrochinon.

Die erfindungsgemäßen Polyester können bis zu 10 Mol-% Carbonatgruppen, bezogen auf die Summe von Ester- und Carbonatgruppen, enthalten.

Die erfindungsgemäßen Polyster können die Reste I bis III in statistischer Verteilung, in Segmenten oder in Blöcken enthalten. Betreffend Komponente I ist darauf zu achten, daß längere Blöcke den Schmelzpunkt und die Schmelzviskosität stark erhöhen können.

Als Endgruppen können die erfindungsgemäßen Polyester –COOH, –H, –OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol, und aromatische Monocarbonsäuren, wie Diphenylcarbonsäuren und Naphthalincarbonsäuren, Kettenabbrecher können in Mengen von 0,5 bis 5 Mol-%, bezogen auf die Summe der Komponenten I und II, eingesetzt werden.

Es können auch verzweigte drei – oder höherfunktionelle – vorzugsweise aromatische – Monomere in Mengen von 0,1 bis 1 Mol-%, bezogen auf die Summe der Komponenten I und II, wie z.B. Phloroglucin, 1,3,5-Benzoltricarbonsäure und 3,5-Dihydroxybenzoesäure, eingesetzt werden.

Die erfindungsgemäßen Polyester besitzen eine inhärente Viskosität von mindestens 0,8, vorzugsweise von mindestens 1,4 dl/g (gemessen an einer Lösung von 5 mg Polyester/ml p-Chlorphenol bei 45°C). Sollten Polyester in p-Chlorphenol unlöslich sein, wird angenommen, daß sie die angegebene Mindestviskosität besitzen; sie sind somit erfindungsgemäß, sofern sie den Parametern des Hauptanspruches genügen.

Die erfindungsgemäßen Polyester besitzen vorzugsweise eine Schmelzviskosität von weniger als 1000 Pa.s, gemessen bei einer Schergeschwindigkeit von $10^3$ $s^{-1}$ unter Verwendung einer Düse mit einem Länge/Durchmesser-Verhältnis von 20 bei einer Temperatur von weniger als 350°C, vorzugsweise weniger als 330°C.

Die erfindungsgemäßen Polyester können nach verschiedenen Verfahren hergestellt werden, z.B. durch Kondensation bzw. Umesterung der reaktiven Derivate der Reste I bis III, z.B. ihrer Ester oder Säurechloride, und anschließende Polykondensation.

Beispiele für bevorzugte Ausgangsverbindungen sind also ihre Arylester, ihre Acylester (vorzugsweise ihre Acetate) und ihre Säurechloride.

Nach einem bevorzugten Syntheseverfahren werden $C_1$-$C_4$-Acylester, vorzugsweise die Acetate, der Reste I und III mit den Dicarbonsäuren der Reste II umgesetzt, wobei die Acylester auch in situ hergestellt werden können. Diese Reaktionen können in der Schmelzphase durchgeführt werden; möglich ist jedoch auch die Reaktion in Gegenwart eines flüssigen wärmeüberleitenden Mediums, das einen hohen Siedepunkt hat.

Die Reste I bis III werden im Verhältnis der entsprechenden Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengrupenelemente, wie z. B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, wie z. B. Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Di-butylzinndiacetat, Di-butyl-dimethoxy-zinn. Besonders bevorzugt sind Magnesium-, Mangan-, Natrium-, Kalium- und Zinkacetat.

Die Katalysatormengen betragen vorzugsweise 0,001 bis 1, insbesondere 0,01 bis 0,2 Gew-%, bezogen auf das Gesamtgewicht der eingesetzten Monomeren.

Die erfindungsgemäßen Polyester werden bei Temperaturen von 160 bis 350°C hergestellt, wobei man im allgemeinen die Reaktion bei niedrigen Temperaturen beginnt und im Verlaufe des Reaktionsfortschritts kontinuierlich die Temperatur erhöht. Bei nachlassender Reaktiongeschwindigkeit kann ein Vakuum angelegt werden, wobei der Druck vorzugsweise kontinuierlich von Normaldruck bis ca. 0,1 mbar gesenkt wird.

Das erhaltene Produkt kann - vorzugsweise in Granulatform - einer Festphasennachkondensation unter vermindertem Druck bei Temperaturen von 200 bis 300°C unterworfen werden; nach 1 bis 25 Stunden hat sich das Molekulargewicht erhöht.

Weiterer Gegenstand der Erfindung ist also ein Verfahren zur Herstellung der neuen Polyester durch Umsetzung der Hydrocarbonsäuren, Dicarbonsäuren und Diphenole mit den Resten I bis III bzw, ihrer reaktionsfähigen Derivate, die auch in situ hergestellt werden können, gegebenfalls in Gegenwart von Kettenabbrechern, Verzweigungsmitteln und Katalysatoren, bei Temperaturen von 160 bis 350°C, gegebenfalls unter vermindertem Druck.

Die erfindungsgemäßen thermotropen Polyester können infolge ihrer relativ geringen Schmelzviskosität aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Des weiteren zeigen sie eine ausgeprägte Strukturviskosität, d.h., daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit, außerordentlicher Zähigkeit und großer Dimensionsstabilität hergestellt werden. Da die Polyester chemikalienresistent und flammwidrig sind, eignen sie sich bevorzugt zur Herstellung von

- elektrotechnischen Artikeln, wie z.B. Isolatoren, gedruckten Schaltungen, Steckkontakten, Armaturenteilen,
- Teilen chemisch-technischer Apparate, wie z.B. Rohren, Behälterauskleidungen, Rotoren, Gleitlagern, Dichtungen,
- Teilen der Flugzeuginnenausstattung,
- Teilen medizinisch-technischer Geräte, wie z.B. Bauteilen von Klimaanlagen, Ventilteilen.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5-65 Gew.-%, bezogen auf verstärkte und gefüllte Formmasse, sind sie bestens geeignet.

Weiterer Gegenstand der Erfindung ist also die Verwendung der neuen Polyester zur Herstellung von Formkörpern, Filamenten, Fasern und Filmen.

<u>Beispiele</u>

Die Prüfung der Schlagzähigkeit $a_n$ und Kerbschlagzähigkeit $a_k$ erfolgte an Normkleinstäben gemäß DIN 53 453 (ISO/R 179) bei 23°C jeweils an 10 Prüfkörpern. Die Bestimmung der Biegefestigkeit wurde an Normkleinstäben gemäß DIN 53 452 (ISO R 178) durchgeführt. Der Biege-E-Modul wurde gemäß DIN 53 457 ermittelt. Die Messung der Wärmeformbeständigkeit erfolgte durch Bestimmungen der Vicat B-Erweichungstemperatur gemäß DIN 53 460 (ISO 306).

<u>Beispiel 1</u> (Vergleich)

In ein 1-l-Planschliffgefäß mit Planschliffdeckel, Rührer, Stickstoffeinleitung und einem Destillationsaufsatz, der mit einem Kühler verbunden war, wurden die folgenden Substanzen eingewogen:

| | |
|---|---|
| 186,3 g (= 1,35 Mol) | p-Hydroxybenzoesäure |
| 112,1 g (= 0,674 Mol) | Terephthalsäure |
| 195,8 g (= 0,674 Mol) | 3-Phenyl-4,4'-dihydroxybenzophenon |
| 330,8 g (= 3,24 Mol) | Essigsäureanhydrid |
| 0,05 g | Magnesiumacetat (wasserfrei) und |
| 0,05 g | Antimontrioxid |

Unter Stickstoffatmosphäre wurde mittels Salzbad auf 180°C erhitzt. Die hierbei einsetzende Destillation von Essigsäure wurde in Gang gehalten, indem die Temperatur innerhalb von 3,5 Stunden stufenweise auf 325°C erhöht wurde. Nach Beendigung der Destillation wurden der Druck innerhalb von 45 Minuten in mehreren Stufen bis auf 20 mbar abgesenkt und die Schmelze unter diesen Bedingungen noch 15 Minuten gerührt.

Während der Vakuumphase nahm die Viskosität der entstandenen Polyesterschmelze stark zu. Die Schmelze wurde daher langsam gerührt.

Am Ende der Destillationsphase war eine Gesamtmenge von 370 g Essigsäure (enthält restliches Acetanhydrid) aufgefangen worden.

Man erhielt einen hellbeigen Polyester mit einer inhärenten Viskosität von 1,6 dl/g. Im Bereich von 225–400°C wurde eine optisch anisotrope Schmelzphase beobachtet.

Beispiele 2–5 (Vergleich)

In der in Beispiel 1 beschriebenen Reaktionsapparatur und unter den dort beschriebenen Reaktionsbedingungen wurden die in Tabelle 1 zusammengestellten Polyester synthetisiert. Die besonders gekennzeichneten Produkte wurden im Anschluß an die Schmelzpolykondensation gemahlen und über einen Zeitraum von 24 Stunden bei einem Druck von zirka 1 mbar und einer Temperatur von 250°C in fester Phase nachkondensiert.

Beispiele 6–10

Unter den in Beispiel 1 beschriebenen Reaktionsbedingungen und mit der dort benutzten Apparatur wurden einige Polyester hergestellt, bei denen Terephthalsäure bzw. 3-Phenyl-4,4'-dihydroxybenzophenon zum Teil durch andere Monomere ersetzt wurden. Die durch Schmelzpolykondensation erhaltenen Reaktionsprodukte wurden gemahlen und bei 250°C/1 mbar über einen Zeitraum von 24 Stunden in der festen Phase nachkondensiert. Tabelle 2 enthält die Zusammensetzung und einige physikalische Daten dieser Produkte.

Zur Prüfung der mechanischen Eigenschaften wurden aus den Polyestern der Beispiele 1-10 durch Spritzguß Normkleinstäbe hergestellt. Die Verarbeitung der Polyester erfolgte bei Temperaturen zwischen 280 und 330°C. In Tabelle 3 sind die gemessenen Werte aufgeführt.

Tabelle 1

| Beispiel | | PHB (Mol) | TS (Mol) | 4,4'-PBP (Mol) | 3',4-PBP (Mol) | nachkondensiert | Inhärente Viskosität (dl/g) | anisotrope Phase (°C) |
|---|---|---|---|---|---|---|---|---|
| 2 | Vergleich | 1,39 | 0,93 | 0,93 | | nein | 1,41 | 250–400 |
| 3 | Vergleich | 1,46 | 0,86 | 0,86 | | nein | 1,52 | 250–400 |
| 4 | Vergleich | 1,62 | 0,70 | 0,70 | | ja | 2,21 | 270–400 |
| 5 | Vergleich | 1,74 | 0,58 | 0,58 | | ja | 2,65 | 280–400 |
| 6 | | 1,51 | 0,93 | | 0,93 | nein | 1,48 | 270–400 |
| 7 | | 1,62 | 0,70 | | 0,70 | ja | 3,26 | 285–400 |

PHP = p-Hydroxybenzoesäure
TS = Terephthalsäure
4,4'–PBP = 3-Phenyl-4,4'-dihydroxybenzophenon
3',4-PBP = 3-Phenyl-3',4-dihydroxybenzophenon

Tabelle 2

| Beispiel | | PHB (Mol) | TS (Mol) | IS (Mol) | 4,4'-PBP (Mol) | Hy (Mol) | Inhärente Viskosität (dl/g) | anisotrope Phase (°C) |
|---|---|---|---|---|---|---|---|---|
| 8 | Vergleich | 1,45 | 0,73 | – | 0,58 | 0,15 | 2,29 | 270–400 |
| 9 | Vergleich | 1,45 | 0,73 | – | 0,51 | 0,22 | 2,43 | 280–400 |
| 10 | Vergleich | 1,79 | 0,48 | 0,05 | 0,53 | – | 1,65 | 285–400 |

PHP = p-Hydroxybenzoesäure
TS = Terephthalsäure
IS = Isophthalsäure
4,4'–PBP = 3-Phenyl-4,4'-dihydroxybenzophenon
Hy = Hydrochinon

Tabelle 3

| Beispiel | | Vicat B (°C) | $a_n/a_k$ (kJ/m$^2$) | Biegefestigkeit (MPa) | Biege-E-Modul (MPa) | Viskosität (Pa.s) |
|---|---|---|---|---|---|---|
| 1 | Vergleich | 142 | 86*/44* | 201 | 6200 | 170/280°C |
| 2 | Vergleich | 138 | 91*/42* | 185 | 6000 | 120/280°C |
| 3 | Vergleich | 140 | 85*/51* | 213 | 6700 | 210/280°C |
| 4 | Vergleich | 142 | 51*/27* | 195 | 7500 | 420/280°C |
| 5 | Vergleich | 144 | 35/21* | 203 | 8000 | 550/280°C |
| 6 | | 149 | 62/27* | 205 | 6900 | 160/280°C |
| 7 | | 151 | 39/23* | 189 | 7600 | 560/290°C |
| 8 | Vergleich | 145 | 37/24* | 185 | 7400 | 460/280°C |
| 9 | Vergleich | 147 | 31*/20* | 197 | 8200 | 570/290°C |
| 10 | Vergleich | 142 | 32*/29* | 207 | 7800 | 350/290°C |

* angebrochen

** Schmelzviskosität bei einer Schergeschwindigkeit von $10^3$ $s^{-1}$ bei der angegebenen Temperatur

## Patentansprüche

1. Thermotrope aromatische Polyester mit einer inhärenten Viskosität von mindestens 0,8 und mit wiederkehrenden Einheiten der Formeln

$$-\overset{\overset{\displaystyle O}{\|}}{C}-Ar^1-O- \qquad (I)$$

$$-\overset{\overset{\displaystyle O}{\|}}{C}-Ar^2-\overset{\overset{\displaystyle O}{\|}}{C}- \qquad (II)$$

$$-O-Ar^3-O- \qquad (III)$$

worin
$Ar^1$, $AR^2$ bivalente aromatische Reste, deren kettenverlängernde Bindungen zu mindestens 90 Mol-% coaxial oder parallel entgegengesetzt und zu höchstens 10 Mol-% gewinkelt sind, mit 6 bis 18 C-Atomen bedeuten, wobei diese Reste durch 1 bis 4 $C_1$-$C_4$-Alkoxygruppen und/oder durch 1 bis 4 Halogenatome (vorzugsweise Fluor, Chlor, Brom) substituiert sein können,
das Molverhältnis I/II 30:70 bis 85:15, und das Molverhältnis II/III 0,95 bis 1,05 betragen,
dadurch gekennzeichnet, daß
$-O-Ar^3-O-$ zu mindestens 50 Mol-% aus Resten der Formel

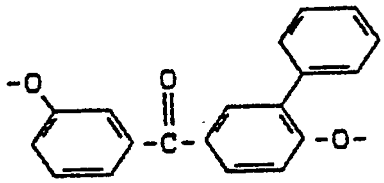

(IV)

und zu höchstens 50 Mol-% aus anderen bivalenten aromatischen Resten, deren kettenverlängernde Bindungen gewinkelt oder coaxial oder parallel entgegengesetzt sind, mit 6 bis 18 C-Atomen besteht, wobei diese Feste durch 1 bis 4 $C_1$–$C_4$-Alkoxygruppen und/oder durch 1 bis 4 Halogenatome substituiert sein können.

2. Polyester nach Anspruch 1, dadurch gekennzeichnet, daß die Reste I und II ausschließlich aromatische Einheiten mit parallel oder coaxial entgegengerichteten kettenverlängernden Bindungen darstellen.

3. Polyester nach Ansprüchen 1 und 2, dadurch gekennzeichnet, daß die wiederkehrenden Einheiten III ausschließlich 3-Phenyl-3',4-dihydroxybenzophenonreste sind.

4. Polyester nach Ansprüchen 1–3, dadurch gekennzeichnet ist, daß $Ar^1$ und $Ar^2$ einen 1,4-Phenylenrest darstellen.

5. Polyester nach Ansprüchen 1–4, dadurch gekennzeichnet, daß das Molverhältnis I/II 45:55 bis 80:20 beträgt.

6. Polyester nach Ansprüchen 1–4, dadurch gekennzeichnet, daß das Molverhältnis I/II 60:40 bis 78:22 beträgt.

7. Verfahren zur Herstellung der Polyester nach Ansprüchen 1–6 durch Umsetzung der Hydroxycarbonsäuren, Dicarbonsäuren und Diphenole mit den Festen I bis III bzw. ihrer reaktionsfähigen Derivate, die auch in situ hergestellt werden können, gegebenenfalls in Gegenwart von Kettenabbrechern, Verzweigungsmitteln und Katalysatoren, bei Temperaturen von 160 bis 350°C, gegebenenfalls unter vermindertem Druck.

8. Verfahren nach Anspruch 7, dadurch gekennzeichnet, daß sich eine Festphasennachkondensation anschließt.

9, Verwendung der Polyester nach Ansprüchen 1–6 zur Herstellung von Formkörpern, Filamenten, Fasern und Filmen.

## Claims

1. Thermotropic aromatic polyesters having an intrinsic viscosity of at least 0.8 and containing recurring units corresponding to the following formulae

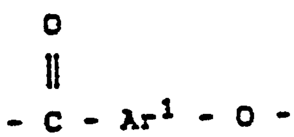

(I)

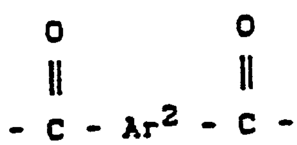

(II)

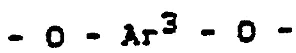

(III)

in which

$Ar^1$, $Ar^2$ are bifunctional $C_6$–$C_{18}$ aromatic radicals in which at least 90 mol-% of the chain-extending bonds are coaxially or parallel-opposed and at most 10 mol-% are angled and which may be substituted by 1 to 4 $C_1$–$C_4$ alkoxy groups and/or by 1 to 4 halogen atoms (preferably fluorine, chlorine, bromine),

the molar ratio of I to II being from 30 : 70 to 85 : 15 and the molar ratio of II to III being from 0.95 to 1.05,

characterized in that at least 50 mol-% of –O–$Ar^3$–O–consists of radicals corresponding to the formula

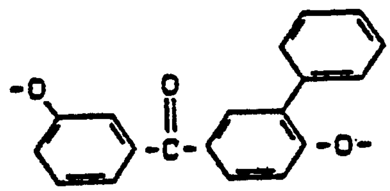

(IV)

and at most 50 mol-% of other bifunctional $C_6$–$C_{18}$ aromatic radicals in which the chain-extending bonds are angled or coaxially or parallel-opposed and which may be substiuted by 1 to 4 $C_1$–$C_4$ alkoxy groups and/or by 1 to 4 halogen atoms.

2. Polyesters as claimed in claim 1, characterized in that the radicals I and II are exclusively aromatic units containing parallel-opposed or coaxially opposed chain-extending bonds.

3. Polyesters as claimed in claims 1 and 2, characterized in that the recurring units III are exclusively 3-phenyl-3',4-dihydroxybenzophenone groups.

4. Polyesters as claimed in claims 1 to 3, characterized in that $Ar^1$ and $Ar^2$ represent a 1,4-phenylene group.

5. Polyesters as claimed in claims 1 to 4, characterized in that the molar ratio of I to II is from 45 : 55 to 80 : 20.

6. Polyesters as claimed in claims 1 to 4, characterized in that the molar ration of I to II is from 60 : 40 to 78 : 22.

7. A process for the production of the polyesters claimed in claims 1 to 6 by reaction of the hydroxycarboxylic acids, dicarboxylic acids and diphenols containing the units I to III or reactive derivatives thereof, which may even be prepared in situ, optionally in the presence of chain terminators, branching agents and catalysts, at temperatures of from 160 to 350°C, optionally under reduced pressure.

8. A process as claimed in claim 7, characterized in that the reaction is followed by solid-phase post-condensation.

9. The use of the polyesters claimed in claims 1 to 6 for the production of moldings, filaments, fibres and films.

## Revendications

1. Polyesters aromatiques thermotropes ayant une viscosité intrinsèque d'au moins 0,8 et présentant des motifs récurrents de formules

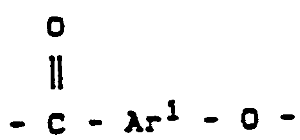

(I)

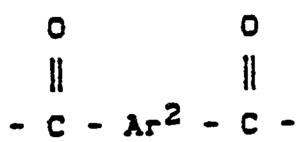

(II)

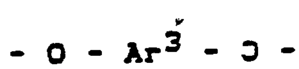

(III)

dans lesquelles
$Ar^1$, $Ar^2$ sont des restes aromatiques divalents dont les liaisons d'allongement de chaîne sont opposées coaxialement ou parallèlement en proportion d'au moins 90 moles % et sont angulaires en proportion de 10 moles% au maximum, ayant 6 à 18 atomes de carbone, ces restes pouvant être substitués par 1 à 4 groupes alkoxy en $C_1$ à $C_4$ et/ou par 1 à 4 atomes d'halogènes (de préférence fluor, chlore, brome), le rapport molaire I/II a une valeur de 30 : 70 à 85 : 15 et le rapport molaire II/III a une valeur de 0,95 à 1,05, caractérisé en ce que, –O–$Ar^3$–O– est constitué, en proportion d'au moins 50 moles%, de restes de formule

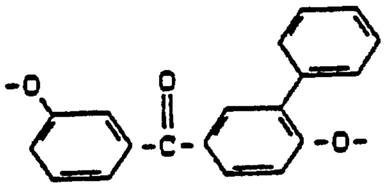

(IV)

et en proportion de 50 moles% au maximum, d'autres restes aromatiques divalents dont les liaisons d'allongement de chaîne sont angulaires ou sont opposées coaxialement ou parallèlement, avec 6 à 18 atomes de carbone, ces restes pouvant être substitués par 1 à 4 groupes alkoxy en $C_1$ à $C_4$ et/ou par 1 à 4 atomes d'halogènes.

2. Polyesters suivant la revendication 1, caractérisés en ce que les restes I et II constituent exclusivement des motifs aromatiques à liaisons d'allongement de chaîne disposées en sens inverse parallèlement ou coaxialement.

3. Polyesters suivant les revendications 1 et 2, caractérisés en ce que les motifs récurrents III sont exclusivement des restes 3-phényl-3',4-dihydroxybenzophénone.

4. Polyesters suivant les revendications 1 à 3, caractérisés en ce que Ar1 et $Ar^2$ représentent un reste 1,4-phénylène.

5. Polyesters suivant les revendications 1 à 4, caractérisés en ce que le rapport molaire I/II a une valeur de 45 : 55 à 80 : 20.

6. Polyesters suivant les revendications 1 à 4, caractérisés en ce que le rapport molaire I/II a une valeur de 60 : 40 à 78 : 22.

7. Procédé de production des polyesters suivant les revendications 1 à 6 par réaction des acides hydroxycarboxyliques, des acides dicarboxyliques et des diphénols portant les restes I à III ou de leurs dérivés réactifs, qui peuvent aussi être préparés in situ, le cas échéant en présence d'agents de terminaison de chaîne, d'agents de ramification et de catalyseurs, à des températures de 160 à 350°C, le cas échéant sous pression réduite.

8. Procédé suivant la revendication 7, caractérisé en ce qu'il est suivi d'une post-condensation en phase solide.

9. Utilisation des polyesters suivant les revendications 1 à 6 pour la production de pièces moulées, de filaments, de fibres et de films.